# EUROPEAN PATENT APPLICATION

(11) **EP 2 548 935 A1**
(43) Date of publication of application: **23.01.2013**
(21) Application number: 11755885.8
(22) Date of filing: 14.03.2011
(51) Int. Cl.: C10G 25/00, B01J 20/06, B01J 20/30, C10G 29/16

(54) **DESULFURIZING AGENT AND MANUFACTURING METHOD THEREFOR**

(30) Priority: 19.03.2010 JP 2010064857
(71) Applicant: Japan Petroleum Energy Center, Minato-ku, Tokyo 105-0001 (JP); JX Nippon Oil & Energy Corporation, Chiyoda-ku Tokyo 100-8162 (JP)
(72) Inventor: ARAKI, Yasuhiro, Tokyo 100-8162 (JP); OTSUKA, Yukio, Tokyo 100-8162 (JP)
(74) Representative: Dean, John Paul
(86) International application number: PCT/JP2011/001480
(87) International publication number: WO 2011/114694

(57) **Abstract**

The present invention provides a desulfurizing agent that can desulfurize hydrocarbon oil in a stable and economical manner over a long period of time under specified conditions, and a method for producing the same. The desulfurizing agent of the present invention is such a desulfurizing agent that is used in a desulfurizing process for removing sulfur components from hydrocarbon oil and contains nickel, zinc and a sulfur component, wherein a sulfur content except metal sulfide in the desulfurizing agent is 0.2% by mass or more in the total mass of the desulfurizing agent, and a proportion of the metal sulfide in the sulfur component contained in the desulfurizing agent is 25% or less.

## Description

### TECHNICAL FIELD

The present invention relates to a desulfurizing agent that can desulfurize a sulfur compound in hydrocarbon oil in a stable manner over a long period of time.

### BACKGROUND OF THE INVENTION

The 21st century automobiles and their fuels are facing challenges in dealing with environmental problems. From the viewpoint of both reducing global warming gas, CO₂, emissions and reducing so-called automobile emission gas such as NOx, there is an increasing demand for reducing sulfur components in fuel. Specifically, since sulfur components in gasoline and light oil are restricted to sulfur-free (sulfur content: 10 mass ppm or less), there is also a demand for fuel oil having a much lower sulfur content, i.e., zero sulfur (sulfur content: 1 mass ppm or less).

Conventionally, in order to remove sulfur compounds remaining in fuel oil, such as gasoline and light oil, so as to limit the sulfur content to 10 mass ppm or less, further to 1 mass ppm, by applying a hydrodesulfurization method which has been mainly used in the art (e.g., a method for desulfurizing under a high-temperature and high-pressure hydrogen atmosphere using an alumina catalyst supporting cobalt, nickel and molybdenum), a hydrodesulfurization reaction, which is a high temperature/pressure reaction, requires operations to be performed at much higher temperatures/pressures than the conventional art. This leads not only to increased energy consumption, but also to massive hydrogen consumption, etc. In addition, in the above-described hydrodesulfurization, attempts to lower the space velocity for a reaction under a mild condition require an enormous amount of catalysts. Thus, a cost increase is inevitable whenever the hydrodesulfurization reaction method is applied. Further, if the above-described hydrodesulfurization is applied, for a gasoline blendstock, a significant loss of octane number is observed because the olefin content is also hydrogenated.

To date, various kinds of desulfurizing agents have already been developed in order to desulfurize the sulfur compound in hydrocarbon oil more effectively, while reducing such loss of octane number. For example, Patent Documents 1-3 listed below disclose nickel-copper based desulfurizing agents and nickel-zinc based desulfurizing agents that are obtained by a coprecipitation method using alumina as a nucleus, and so on, where attempts are made to achieve efficient desulfurization by improving the bulk density and specific surface area to high levels and by including alumina to increase catalyst performance.

### RELATED ART DOCUMENTS

### PATENT DOCUMENTS

Patent Document 1: JP 2005-95817 A
Patent Document 2: JP 2001-62297 A
Patent Document 3: JP 2004-230317 A

### SUMMARY OF THE INVENTION

### PROBLEM TO BE SOLVED BY THE INVENTION

However, it is only ascertained that any of these desulfurizing agents can endure desulfurization processes over several hundreds of hours at most, and an activity restoration process with hydrogen or a replacement with a new desulfurizing agent must still be performed in a relatively short period of time. Therefore, there is a strong demand for the emergence of a desulfurizing agent that offers so high performance that can withstand a longer duration of use.

Therefore, an object of the present invention is to provide a desulfurizing agent that can desulfurize hydrocarbon oil in a stable and economical manner over a long period of time under specified conditions, and a method for producing the same.

### MEANS FOR SOLVING THE PROBLEM

To solve the above-described problem, the present inventors have found that by using a particular desulfurizing agent, sulfur components in hydrocarbon oil may be reduced in a stable manner over a long period of time, and as a result the present invention has been accomplished.

That is, the desulfurizing agent of the present invention is such a desulfurizing agent that is used in a desulfurizing process for removing sulfur components from hydrocarbon oil and that contains nickel, zinc and a sulfur component, wherein a sulfur content except metal sulfide in the desulfurizing agent is 0.2% by mass or more in the total mass of the desulfurizing agent, and a proportion of the metal sulfide in the sulfur component contained in the desulfurizing agent is 25% or less. In addition, it is desirable that the above-described desulfurizing agent contains nickel in an amount of 1-50% by mass and zinc in an amount of 20-80% by mass, and that it has a specific surface area of 100 m²/g or more.

Further, a method for producing a desulfurizing agent according to the present invention is a method for producing a desulfurizing agent, the desulfurizing agent obtained by a coprecipitation method using an acid solution containing nickel and zinc and an alkaline solution containing an alkali metal, wherein a ratio of an amount of alkali metals contained in the alkaline solution to a total amount of nickel and zinc contained in the acid solution is preferably 2.4 or less in molar ratio.

### EFFECT OF THE INVENTION

Since the desulfurizing agent of the present invention contains nickel and zinc as well as a particular sulfur component, a synergistic effect among these allows desulfurization of hydrocarbon oil in a stable and economical manner over a long period of time. In addition, according to the production method of the present invention, the above-described desulfurizing agent may be easily obtained by a coprecipitation method using particular raw materials in particular proportions.

### BEST MODE FOR CARRYING OUT THE INVENTION

The present invention will now be specifically described. The desulfurizing agent of the present invention is such a desulfurizing agent that is used in a desulfurizing process for removing sulfur components from hydrocarbon oil and contains nickel, zinc and a sulfur component, wherein a sulfur content except metal sulfide in the desulfurizing agent is 0.2% by mass or more in the total mass of the desulfurizing agent, and a proportion of the metal sulfide in the sulfur component contained in the desulfurizing agent is 25% or less.

### [Desulfurizing Agent]

The desulfurizing agent of the present invention contains nickel, zinc and a sulfur component except metal sulfide, and may be obtained by, e.g., causing metal components, such as zinc and nickel, to be precipitated by a coprecipitation method, and then filtered, washed and subjected to some processes, such as molding and calcining.

The nickel content based on the total mass of the desulfurizing agent is preferably 1-50% by mass, more preferably 1-30% mass, still more preferably 3-24% mass, particularly preferably 14-24% by mass. In addition, the zinc content based on the total mass of the desulfurizing agent is preferably 20-80% by mass, more preferably 30-80% by mass, more preferably 40-75% by mass. If the nickel content is greater than 50% by mass or if the zinc content is less than 20% by mass, this is unfavorable because the lifetime of the desulfurizing agent is shortened. On the other hand, if the nickel content is 30% by mass or less and if the zinc content is 30% by mass or more, the lifetime of the desulfurizing agent is prolonged; and if the nickel content is 24% by mass or less and if the zinc content is 40% by mass or more, the lifetime of the desulfurizing agent is particularly prolonged. It should be noted that the total content of nickel and zinc is preferably within a range of 35-85% by mass, particularly 50-85% by mass, based on the total mass of the desulfurizing agent.

It is desirable that the desulfurizing agent of the present invention contains the above-described nickel and zinc as oxides, and the total content of nickel, zinc and oxygen is preferably 90% by mass or more, based on the total mass of the desulfurizing agent, more preferably 95% by mass or more, still more preferably 97% by mass or more, particularly preferably 99% by mass or more.

In addition, the mass ratio of zinc atoms to nickel atoms (Zn/Ni) in the desulfurizing agent is preferably within a range of 1-15, more preferably within a range of 3-12, particularly preferably within a range of 3-8. If the mass ratio of zinc atoms to nickel atoms (Zn/Ni) is below 1, this is unfavorable because the lifetime of the desulfurizing agent is significantly shortened; if above 15, this is also unfavorable because the lifetime of the desulfurizing agent is shortened.

If the desulfurizing agent of the present invention contains nickel and zinc as oxides, then the nickel oxide has a crystallite size of 4.5 nm or less, preferably 4.0 nm or less, and the zinc oxide has a crystallite size of 12 nm or less, preferably 10 nm or less. If the nickel oxide has a crystallite size of greater than 4.5 nm, this is unfavorable because the contact efficiency between nickel and hydrocarbon oil decreases, compromising the ability to capture sulfur. On the other hand, if the zinc oxide has a crystallite size of greater than 12 nm, this is unfavorable because the efficiency with which the zinc oxide immobilizes sulfur is reduced. In addition, if the nickel oxide has a crystallite size of 4.0 nm or less, this offers a particularly high ability to capture sulfur by virtue of a high contact efficiency between nickel and hydrocarbon oil. On the other hand, if the zinc oxide has a crystallite size of 10 nm or less, this offers a particularly high efficiency with which the zinc oxide immobilizes sulfur.

It should be noted that the ratio of the crystallite size of the zinc oxide to the crystallite size of the nickel oxide is preferably 2 or more, more preferably 2.5 or more. If the ratio of the crystallite size of the zinc oxide to the crystallite size of the nickel oxide is less than 2, this is unfavorable because the contact efficiency between nickel and hydrocarbon oil is reduced, compromising the ability to capture a sulfur compound contained in the hydrocarbon oil into the desulfurizing agent, and at the same time reducing the efficiency with which zinc immobilizes sulfur.

The desulfurizing agent of the present invention further contains a sulfur component, where a sulfur content except metal sulfide in the desulfurizing agent is 0.2% by mass or more, in 100% by mass of the total mass of the desulfurizing agent, preferably 0.3-1.8% by mass, more preferably 0.4-1.6% by mass, still more preferably 0.4-1.0% by mass. In addition, this sulfur content is except metal sulfide, such as nickel sulfide and zinc sulfide, and is already contained in the desulfurizing agent of the present invention before a desulfurizing process. That is, normally, upon undergoing a desulfurizing process using a desulfurizing agent containing nickel and zinc, sulfur compounds in hydrocarbon oil are adsorbed and immobilized so that the sulfur compounds are contained in the desulfurizing agent in the form of nickel sulfide or zinc sulfide. However, the sulfur content in the desulfurizing agent of the present invention is already contained before undergoing a desulfurizing process and represents a sulfur content except metal sulfide, which is different from nickel sulfide or zinc sulfide. By containing such a sulfur content, the specific surface area of the obtained desulfurizing agent may be dramatically increased, thereby achieving prolongation of the lifetime of the desulfurizing agent. If the sulfur content in the above-described desulfurizing agent is less than 0.2% by mass based on the total mass of the desulfurizing agent, this is unfavorable because a sufficient specific surface area cannot be provided. On the other hand, if the sulfur content except metal sulfide in the desulfurizing agent is increased more than required, contents of nickel and zinc are decreased more than required, which may interfere with the desulfurization performance provided by these components. Thus, the sulfur content except metal sulfide in the desulfurizing agent is preferably 1.8% by mass or less, more preferably 1.6% by mass, still more preferably 1% by mass or less. Besides, the sulfur content except metal sulfide in the desulfurizing agent may be determined by the following method. Firstly, a content of sulfur (sulfur content) contained in the desulfurizing agent is measured by a combustion in oxygen stream-infrared absorption method. Then, a proportion of the metal sulfide in the sulfur component contained in the desulfurizing agent is determined by XPS (photoelectron spectroscopy) using the following method. Finally, the sulfur content except metal sulfide in the desulfurizing agent is given by: (sulfur content except metal sulfide in desulfurizing agent) = (sulfur content in desulfurizing agent) * (1 - proportion (%) of metal sulfide in sulfur content in desulfurizing agent / 100).

In the desulfurizing agent of the present invention, a proportion of the metal sulfide in the sulfur component contained in the desulfurizing agent is 25% or less, preferably 15% or less, more preferably 5% or less, still more preferably 1% or less. If a proportion of metal sulfide in the sulfur component contained in the desulfurizing agent is greater than 25%, this is unfavorable because the amount of the sulfur content that can be captured into the desulfurizing agent is reduced and the lifetime of the desulfurizing agent is shortened. A proportion of metal sulfide in the sulfur component contained in the desulfurizing agent may be determined by the following method using XPS (photoelectron spectroscopy).

While the above-described desulfurizing agent may further contain elements other than nickel, zinc, oxygen and sulfur, the less elements other than nickel, zinc, oxygen and sulfur the desulfurizing agent contains, the more preferred it is from the viewpoint of the lifetime thereof.

The desulfurizing agent of the present invention is preferably obtained by a coprecipitation method using sulfates of nickel and zinc as an acid solution. In this case, it is estimated that the above-described sulfur component is mainly originated from sulfate radicals thereof (SO₄²⁻). Then, if such a sulfur component still remains in the desulfurizing agent while containing a particular amount of sulfur even after undergoing some processes, such as deposition, filtering, washing, molding and calcining, this contributes greatly to increasing the specific surface area of the desulfurizing agent.

The desulfurizing agent of the present invention has a specific surface area of 100 m²/g or more, preferably 110-200, more preferably 110-150 m²/g. It is estimated that the increase in specific surface area is mainly ascribed to the involvement of the sulfur component containing a particular amount of sulfur. However, if the specific surface area is below 100 m²/g, the lifetime of the desulfurizing agent may not be long enough, while above 200 m²/g, the bulk density of the desulfurizing agent becomes so small that a reactor of a certain capacity can be filled with a less mass. This is unfavorable because sufficient prolongation of the lifetime cannot be achieved.

Preferably, the desulfurizing agent of the present invention is processed for use under a hydrogen atmosphere at 200-350°C, particularly 250-300°C. If the process temperature under the hydrogen atmosphere is below 200°C, this is unfavorable because nickel will not be reduced. In addition, if the process temperature exceeds 350°C, this is unfavorable because nickel will be sintered, which results in a lower activity.

Preferably, the desulfurizing agent of the present invention is prepared by a coprecipitation method. The preparation method by coprecipitation allows a larger amount of nickel and zinc, which are effective for desulfurization, to be contained in the desulfurizing agent, as compared with other production methods where metal components, such as zinc or nickel, are impregnated in and supported on a porous carrier, such as alumina, and then subjected to calcining. Therefore, prolongation of the lifetime of the desulfurizing agent may be achieved and the specific surface area may be increased sufficiently because it is easy to contain an effective sulfur content in the desulfurizing agent. In addition, a method where a zinc oxide carrier is impregnated with nickel is unfavorable because the specific surface area and pore volume are reduced and desulfurization activity is lowered due to blockage of pores of the zinc oxide carrier, which causes difficulty in containing an effective sulfur content in the desulfurizing agent.

Preferably, the desulfurizing agent of the present invention is prepared in the coprecipitation method using nickel sulfate as a raw material of nickel and zinc sulfate as a raw material of zinc. By preparing the desulfurizing agent using nickel sulfate as a raw material of nickel and zinc sulfate as a raw material of zinc, it is ensured that a particular amount of sulfur is contained in the desulfurizing agent. As a result, it becomes easier to effectively increase the specific surface area of the desulfurizing agent, and further reduce the crystallite sizes of the nickel oxide and zinc oxide. The above-described nickel sulfate and zinc sulfate may be hydrates or anhydrides. In addition, if nickel nitrate or nickel acetate is used as the raw material of nickel, or if zinc nitrate or zinc acetate is used as the raw material of zinc, then the above-described sulfur component, which contains sulfur originated from sulfate radicals (SO₄²⁻), may be contained in the desulfurizing agent without fail by adding sulfuric acid and so on.

In the coprecipitation method, the total concentration of nickel and zinc in an acid solution containing nickel and zinc is preferably within a range of 0.3-3.0 mol/L, more preferably within a range of 0.3-1.0 mol/L. If the total concentration of nickel and zinc in the acid solution is 3.0 mol/L or less, the crystallite sizes of the nickel oxide and zinc oxide may be made small enough. On the other hand, if the total concentration of nickel and zinc in the acid solution is less than 0.3 mol/L, the productivity of the desulfurizing agent is lowered. It should be noted that the amount of adding drop-wise the acid solution is preferably within a range of 0.3-4.0 L, more preferably within a range of 1.0-3.5 L, for 1 L of water.

An alkaline solution in the coprecipitation method desirably contains alkali metals, such as lithium, sodium and potassium. While the coprecipitation method causes generation of precipitation by a neutralizing reaction, to ensure precipitation of metal components such as nickel and zinc in the acid solution, generation of precipitation is usually performed under the condition of excess of the alkaline solution. On the other hand, it is found in the present invention that by performing a coprecipitation method under the condition of almost the same mole of acid and alkali, a desulfurizing agent having an increased specific surface area is obtained.

Specifically, considering the valence, a ratio of an amount of alkali metals contained in the above-described alkaline solution to a total amount of nickel and zinc contained in the above-described acid solution is preferably 2.4 or less, more preferably 1.6-2.2, particularly preferably 1.8-2.2. By using the alkaline solution and the acid solution so that their molar ratios are within the above-described ranges, a desulfurizing agent having an increased specific surface area may be obtained efficiently, while containing preferred amounts of nickel, zinc and a sulfur component.

Used as the alkaline solution containing alkali metals may be lithium carbonate, sodium carbonate, potassium carbonate and so on; among these, sodium carbonate is preferably used. Preferably, the alkaline solution has a pH of 11-13.

The cation (alkali metal ion) concentration in the above-described alkaline solution is preferably within a range of 0.3-4.0 mol/L, more preferably within a range of 0.6-1.5 mol/L. In this case, cations (alkali metal ions) of the alkaline solution include a lithium ion, sodium ion, potassium ion and so on. If the cation concentration in the alkaline solution is 4.0 mol/L or less, the crystallite sizes of the nickel oxide and zinc oxide may be made small enough. On the other hand, if the cation concentration in the alkaline solution is less than 0.3 mol/L, the productivity of the desulfurizing agent is lowered. It should be noted that the amount of adding drop-wise the alkaline solution is preferably within a range of 0.3-4.0 L, more preferably within a range of 1.0-3.5 L.

The precipitate generated in the above-described process needs to be dried after filtering, preferably at a drying temperature of 100-200°C. In addition, the subsequent calcining is preferably performed at a temperature of 300-400°C, more preferably 300-350°C. If the calcining temperature is below 300°C, this is unfavorable because salts are not completely dissolved when the nickel and zinc components are precipitated. On the other hand, if the calcining temperature exceeds 400°C, this is unfavorable because crystallization of oxides of nickel and zinc formed by dissolution of salts, etc., proceeds and thereby reduces the degree of dispersion of nickel to zinc.

As used herein, the term desulfurizing agent means a desulfurizing agent having a sulfur sorption function. The desulfurizing agent having a sulfur sorption function as used herein indicates a desulfurizing agent that has a function to immobilize sulfur atoms in an organic sulfur compound to the desulfurizing agent, while detaching the hydrocarbon residues other than the sulfur atoms in the organic sulfur compound from the desulfurizing agent by means of cleavage of carbon-sulfur bonds in the organic sulfur compound. When the hydrocarbon residues in this organic sulfur compound are detached, hydrogen present in the system is added to carbon for which the bond formed with sulfur has been cleaved. Thus, the hydrocarbon compound resulting from removing sulfur atoms from the organic sulfur compound is obtained as a product. However, the hydrocarbon compound from which sulfur atoms are removed may be further subjected to reactions, such as hydrogenation, isomerization, dissolution and so on, to obtain another compound. On the other hand, since sulfur is immobilized to the desulfurizing agent, no sulfur compound such as hydrogen sulfide is generated as a product, unlike the hydrorefining process. Similarly, since sulfur in the sulfur component contained in the desulfurizing agent is also firmly fixed to the desulfurizing agent in advance before undergoing a desulfurizing process, any sulfur compound cannot be produced during or even after a desulfurizing process. Therefore, facilities for removing hydrogen sulfide are not required, which is economically advantageous.

### [Hydrocarbon Oil]

Hydrocarbon oil as the raw material to be desulfurized using the desulfurizing agent of the present invention includes, without limitation, any hydrocarbon oil that contains a sulfur content preferably in an amount of 2 mass ppm or more, more preferably 2-1000 mass ppm, still more preferably 2-100 mass ppm, particularly preferably 2-40 mass ppm. If the sulfur content is above 1,000 mass ppm, this is unfavorable because the lifetime of the desulfurizing agent is shortened.

Specific examples of hydrocarbon oil as the raw material include blendstocks corresponding to an LPG fraction, gasoline fraction, naphtha fraction, kerosene fraction, light oil fraction and so on that are commonly produced in refineries. The LPG fraction is fuel gas and industrial source gas that are based on propane, propylene, butane, butylene and so on. The LPG fraction, which is also referred to as LPG (liquefied petroleum gas), is usually stored in a spherical tank under pressure in a liquid phase state, or stored at a low temperature under a near atmospheric pressure in a liquid phase state. Generally, the above-described gasoline fraction, which is mainly based on hydrocarbon having a carbon number of 4-11, has a density (at 15°C) of 0.783 g/cm³ or less, a 10% distillation temperature of 24°C or more and a 90% distillation temperature of 180°C or less. The above-described naphtha fraction is a general term for the components of gasoline fraction (whole naphtha, light naphtha, heavy naphtha or hydrodesulfurized naphtha thereof) or those components that are raw materials for catalytic reforming (desulfurized heavy naphtha) for producing gasoline blendstocks, etc. The naphtha fraction has a boiling point range that is almost the same as or within that of the gasoline fraction. Thus, the naphtha fraction is often used in the same meaning as the gasoline fraction. The above-described kerosene fraction is generally a hydrocarbon mixture having a boiling point range of 150-280°C. The above-described light oil fraction is generally a hydrocarbon mixture having a boiling point range of 190-350°C.

In addition, hydrocarbon oil as the raw material is not limited to those produced in refineries, but may also be petroleum (hydrocarbon) gas that contains a sulfur content in an amount of 2-1000 mass ppm and that is produced by petrochemistry, or a fraction having the same boiling point range as described above. Preferably used as hydrocarbon oil may include any products that are obtained by fractional distillation of hydrocarbon obtained by thermal or catalytic cracking of heavy crude oil.

It should be noted that particularly favorable as hydrocarbon oil as the raw material that is subjected to desulfurization using the desulfurizing agent of the present invention are catalytically cracked gasoline and a light oil fraction. Since the catalytically cracked gasoline contains a large amount of olefin, in a commonly-practiced hydrorefining using a hydrodesulfurization catalyst, the octane number will be significantly reduced due to hydrogenation of the olefin content. In contrast, according to the desulfurization method of the present invention, most of the olefin content will not be hydrogenated. In addition, since a large amount of aromatic content is contained in a light oil fraction, in a commonly-practiced hydrorefining using a hydrodesulfurization catalyst, a large amount of hydrogen is consumed due to hydrogenation of the aromatic content. In contrast, according to the desulfurization method of the present invention, most of the aromatic content will not be hydrogenated. However, in the case of a light oil fraction, a sulfur component is usually contained in an amount of around 10,000 mass ppm. Thus, it is preferable that the desulfurization method of the present invention is applied after the sulfur component is reduced to a certain extent, specifically to on the order of 5-50 mass ppm, at the time of hydrorefining using a hydrodesulfurization catalyst. If the desulfurizing agent contains a sulfur component in a large amount, the lifetime of the desulfurizing agent is significantly reduced.

### [Desulfurization Reaction Conditions]

As a condition under which hydrocarbon oil is brought into contact with the desulfurizing agent, reaction temperature is preferably 50-300°C, more preferably 100-300°C. If the reaction temperature is below 50°C, this is unfavorable because the desulfurization rate is lowered, preventing efficient desulfurization. In addition, if the reaction temperature exceeds 300°C, this is unfavorable because the desulfurizing agent is sintered, deteriorating both the desulfurization rate and desulfurization capacity. It should be noted that a reaction temperature of 100°C or more may provide a sufficiently high desulfurization rate and thereby achieve an efficient desulfurization.

In addition, the reaction pressure is preferably 0.2-5.0 MPa in gauge pressure, more preferably 0.2-3.0 MPa, particularly preferably 0.2-2.0 MPa. If the reaction pressure is below 0.2 MPa, this is unfavorable because the desulfurization rate is lowered, preventing efficient desulfurization. In addition, if the reaction pressure exceeds 5.0 MPa, this is unfavorable because a side reaction proceeds, such as hydrogenation of the olefin or aromatic content in the hydrocarbon oil. It should be noted that a reaction pressure of 3.0 MPa or less may sufficiently suppress a side reaction such as hydrogenation of the olefin or aromatic content, and a reaction pressure of 2.0 MPa or less may prevent such side reactions without fail.

Further, the liquid space velocity (LHSV) preferably exceeds 2.0 h⁻¹, more preferably 2.1 h⁻¹ or more. In addition, LHSV is preferably 50.0 h⁻¹ or less, more preferably 20.0 h⁻¹ or less, still more preferably 10.0 h⁻¹ or less. If LHSV is 2.0 h⁻¹ or less, this is unfavorable because the throughput is limited, the size of the desulfurization reactor becomes too large and so on, preventing economical desulfurization. In addition, if LHSV exceeds 50.0 h⁻¹, this is unfavorable because it is not possible to obtain a sufficient contact time for desulfurization, lowering the desulfurization rate. It should be noted that LHSV of 2.1 h⁻¹ or more may offer a sufficiently economical desulfurization, LHSV of 20.0 h⁻¹ or less improves the desulfurization rate due to a sufficiently long contact time, and LHSV of 10.0 h⁻¹ or less achieves a particularly high desulfurization rate.

Hydrogen/oil ratios include, without limitation, for a fraction containing a large amount of olefin, as is the case with a catalytically cracked gasoline, preferably 0.01-200 NL/L, more preferably 0.01-100 NL/L, particularly preferably 0.1-100 NL/L. If the hydrogen/oil ratio is below 0.01 NL/L, this is unfavorable because the desulfurization does not proceed sufficiently. In addition, if the hydrogen/oil ratio is above 200 NL/L, this is unfavorable because a side reaction such as hydrogenation of olefin occurs at a higher ratio.

In addition, in the case of a fraction containing a polycyclic aromatic group as is the case with a light oil fraction, the hydrogen/oil ratio is preferably 1-1000 NL/L, more preferably 10-500 NL/L, particularly preferably 50-400 NL/L. If the hydrogen/oil ratio is less than 1 NL/L, this is unfavorable because the desulfurization does not proceed sufficiently. In addition, if the hydrogen/oil ratio is 1000 NL/L, this is unfavorable because hydrogen flow increases too much and the hydrogen compressor becomes large in size.

While hydrogen used in desulfurization may contain impurities such as methane, the hydrogen purity is preferably 50 vol% or more, more preferably 80 vol% or more, particularly preferably 95 vol% or more, in order to avoid an excessively large hydrogen compressor. Since any sulfur compound such as hydrogen sulfide in hydrogen shortens the lifetime of the desulfurizing agent, a sulfur content in hydrogen is preferably 1,000 ppm by volume or less, more preferably 100 ppm by volume or less, particular preferably 10 ppm by volume or less.

### EXAMPLES

The present invention will now be specifically described based on the following examples. However, the present invention is not intended to be limited to the disclosed examples.

A proportion of metal sulfide in the sulfur component contained in the desulfurizing agent before desulfurization (which may be abbreviated herein as "a proportion of metal sulfide") was determined by XPS (photoelectron spectroscopy, 5600MC, manufactured by ULVAC-PHI, Incorporated). The following is a specific description of the determination. When a sample containing a sulfur compound is subjected to an XPS measurement, a peak is detected at a sulfur 2p region (at binding energy of 160-180 eV). Different types of sulfur compounds have peak tops at different positions, e.g., 160-164 eV for metal sulfide and 168-171 eV for sulfate radical. In the present invention, assuming that a peak area (A) at 159-165 eV is metal sulfide and a peak area (B) at 165-172 eV is sulfate radical, a proportion (C) of the metal sulfide in the sulfur component contained in the desulfurizing agent was given by: C (%) = A/(A+B) * 100. In addition, the content of sulfur contained in the desulfurizing before desulfurization was measured by a combustion in oxygen stream-infrared absorption method, while the contents of nickel and zinc were measured by an alkali fusion ICP method. Further, a NiO crystallite size was determined from a peak width at half height of a NiO (200) surface of X-ray diffraction and a ZnO crystallite size was determined from a peak width as half height of a ZnO (100) surface of X-ray diffraction, by Scherrer's equation, respectively. A sulfur content except metal sulfide in the desulfurizing agent was given by: (sulfur content except metal sulfide in desulfurizing agent) = (sulfur content in desulfurizing agent) * (1 - C (%)/100). The specific surface area of the desulfurizing agent was measured by the BJH method using the nitrogen adsorption/desorption method. The results thereof and the results of an oil flow test described below are shown in Table 1.

### [Example 1]

In this case, 800 mL of a solution of 76.3 g of sodium carbonate dissolved in water was prepared. In addition, 1,600 mL of a solution of 172.5 g of zinc sulfate heptahydrate and 52.6 g of nickel sulfate hexahydrate dissolved in water was heated to 60°C, then the total amount of the prepared sodium carbonate solution was dropped to the solution over 10 minutes, and the resultant mixture was stirred continuously for one hour. The obtained precipitate was filtered and then washed with water four times. Then, after dried at 120°C for 16 hours, it was calcined at 350°C for 3 hours and thereby a desulfurizing agent (I) was obtained.

The desulfurizing agent (I) was loaded into a reactor and subjected to reduction in a hydrogen stream at 250°C for 16 hours. Subsequently, an oil flow test of hydrocarbon oil was performed. Used as hydrocarbon oil was heavy catalytically cracked gasoline having a sulfur content of 13 mass ppm. Under the conditions of reaction temperature of 150°C, reaction pressure of 0.3 MPa, hydrogen/oil ratio = 10 NL/L and LHSV = 3.0 h⁻¹, oil flow of hydrocarbon oil was initiated from the inlet of the reactor. As a result, it was found that the time (cycle length) during which the desulfurization rate was maintained at 50% or more was 1,995 hours.

### [Example 2]

In this case, 850 mL of a solution of 88.2 g of sodium carbonate dissolved in water was prepared. In addition, 1,600 mL of a solution of 172.5 g of zinc sulfate heptahydrate and 52.6 g of nickel sulfate hexahydrate dissolved in water was heated to 60°C, then the total amount of the prepared sodium carbonate solution was dropped to the solution over 10 minutes, and the resultant mixture was stirred continuously for one hour. The obtained precipitate was filtered and then washed with water four times. Then, after dried at 120°C for 16 hours, it was calcined at 350°C for 3 hours and thereby a desulfurizing agent (II) was obtained.

Subsequently, using the obtained desulfurizing agent (II), an oil flow test of hydrocarbon oil was performed in a similar manner to Example 1. As a result, it was found that the time (cycle length) during which the desulfurization rate was maintained at 50% or more was 2,020 hours.

### [Example 3]

While 600 mL of distilled water is heated to a temperature of 60°C with stirring, 300 mL of a solution of 172.5 g of zinc sulfate heptahydrate and 52.6 g of nickel sulfate hexahydrate dissolved in water as well as 300 mL of a solution of 93.3 g of sodium carbonate dissolved in water were dropped. Drop-wise addition of an acid solution A and an alkaline solution B was initiated substantially at the same time and was terminated 60 minutes later. Then, the resultant mixture was stirred continuously for one hour. The obtained precipitate was filtered and then washed with water four times. Then, after dried at 120°C for 16 hours, it was calcined at 350°C for 3 hours and thereby a desulfurizing agent (III) was obtained.

Subsequently, using the obtained desulfurizing agent (III), an oil flow test of hydrocarbon oil was performed in a similar manner to Example 1. As a result, it was found that the time (cycle length) during which the desulfurization rate was maintained at 50% or more was 2,116 hours.

### [Example 4]

In this case, 850 mL of a solution of 61.7 g of sodium carbonate dissolved in water was prepared. In addition, 1,600 mL of a solution of 172.5 g of zinc sulfate heptahydrate and 52.6 g of nickel sulfate hexahydrate dissolved in water was heated to 60°C, then the total amount of the prepared sodium carbonate solution was dropped to the solution over 10 minutes, and the resultant mixture was stirred continuously for one hour. The obtained precipitate was filtered and then washed with water four times. Then, after dried at 120°C for 16 hours, it was calcined at 350°C for 3 hours and thereby a desulfurizing agent (IV) was obtained.

Subsequently, using the obtained desulfurizing agent (IV), an oil flow test of hydrocarbon oil was performed in a similar manner to Example 1. As a result, it was found that the time (cycle length) during which the desulfurization rate was maintained at 50% or more was 1,644 hours.

### [Comparative Example 1]

In this case, 850 mL of a solution of 103.9 g of sodium carbonate dissolved in water was prepared. In addition, 1,600 mL of a solution of 172.5 g of zinc sulfate heptahydrate and 52.6 g of nickel sulfate hexahydrate dissolved in water was heated to 60°C, then the total amount of the prepared sodium carbonate solution was dropped to the solution over 10 minutes, and the resultant mixture was stirred continuously for one hour. The obtained precipitate was filtered and then washed with water four times. Then, after dried at 120°C for 16 hours, it was calcined at 350°C for 3 hours and thereby a desulfurizing agent (V) was obtained.

Subsequently, using the obtained desulfurizing agent (V), an oil flow test of hydrocarbon oil was performed in a similar manner to Example 1. As a result, it was found that the time (cycle length) during which the desulfurization rate was maintained at 50% or more was 1,535 hours.

### [Comparative Example 2]

The desulfurizing agent (III) obtained in Example 3 was loaded into a reactor and subjected to reduction in a hydrogen stream at 300°C for 16 hours, after which hydrocarbon oil containing a sulfur component was allowed to flow. Used as hydrocarbon oil was heavy catalytically cracked gasoline having a sulfur content of 13 mass ppm. Under the conditions of reaction temperature of 150°C, reaction pressure of 0.3 MPa, hydrogen/oil ratio = 10 NL/L and LHSV = 3.0 h⁻¹, and after oil flow for 150 hours, the desulfurizing agent was removed from the reactor and thereby a desulfurizing agent (VI) was obtained.

Subsequently, using the obtained desulfurizing agent (VI), an oil flow test of hydrocarbon oil was performed in a similar manner to Example 1. As a result, it was found that the time (cycle length) during which the desulfurization rate was maintained at 50% or more was 1,304 hours.

### [Comparative Example 3]

While 600 mL of distilled water is heated to a temperature of 60°C with stirring, 300 mL of a solution of 178.5 g of zinc nitrate hexahydrate and 58.2 g of nickel nitrate hexahydrate dissolved in water as well as 300 mL of a solution of 104.0 g of sodium carbonate dissolved in water were dropped. Drop-wise addition of an acid solution A and an alkaline solution B was initiated substantially at the same time and was terminated 60 minutes later. Then, the resultant mixture was stirred continuously for one hour. The obtained precipitate was filtered and then washed with water four times. Then, after dried at 120°C for 16 hours, it was calcined at 350°C for 3 hours and thereby a desulfurizing agent (VII-1) was obtained.

The desulfurizing agent (VII-1) was loaded into a reactor and subjected to reduction in a hydrogen stream at 300°C for 16 hours, after which hydrocarbon oil containing a sulfur component was allowed to flow. Used as hydrocarbon oil was heavy catalytically cracked gasoline having a sulfur content of 13 mass ppm. Under the conditions of reaction temperature of 150°C, reaction pressure of 0.3 MPa, hydrogen/oil ratio = 10 NL/L and LHSV = 3.0 h⁻¹, and after oil flow for 600 hours, the desulfurizing agent was removed from the reactor and thereby a desulfurizing agent (VII) was obtained.

Subsequently, using the obtained desulfurizing agent (VII), an oil flow test of hydrocarbon oil was performed in a similar manner to Example 1. As a result, it was found that the time (cycle length) during which the desulfurization rate was maintained at 50% or more was 1,001 hours.

**[Table 1]**

| | Ex. 1 | Ex. 2 | Ex. 3 | Ex. 4 | Comp. Ex. 1 | Comp. Ex. 2 | Comp. Ex. 3 |
|---|---|---|---|---|---|---|---|
| | Desulfurizing agent (I) | Desulfurizing agent (II) | Desulfurizing agent (III) | Desulfurizing agent (IV) | Desulfurizing agent (V) | Desulfurizing agent (VI) | Desulfurizing agent (VII) |
| A ratio of alkali metals to the total amount of nickel and zinc in the solution [Na/(Ni+Zn)] (molar ratio) | 1.80 | 2.08 | 2.20 | 1.46 | 2.45 | 2.20 | 2.45 |
| NiO crystallite size (nm) | 2.7 | 3.6 | 2.9 | 2.5 | 4.4 | 3.2 | 5.0 |
| ZnO crystallite size (nm) | 6.7 | 8.5 | 7.0 | 5.5 | 10.9 | 9.4 | 12.5 |
| Amount of Ni (% by mass) | 15.2 | 16.9 | 16.5 | 12.4 | 17.6 | 16.6 | 16.9 |
| Amount of Zn (% by mass) | 58.0 | 58.9 | 59.2 | 60.1 | 59.8 | 59.1 | 59.5 |
| Amount of NiO (% by mass) | 19.3 | 21.5 | 21.0 | 15.8 | 22.4 | 21.1 | 21.5 |
| Amount of ZnO (% by mass) | 72.2 | 73.3 | 73.7 | 74.8 | 74.4 | 73.6 | 74.1 |
| Amount of S (% by mass) | 1.56 | 0.66 | 0.40 | 1.82 | 0.13 | 0.54 | 1.45 |
| Proportion of metal sulfide (%) | 0 | 0 | 0 | 0 | 0 | 26 | 100 |
| Sulfur content except metal sulfide in the desulfurizing agent (% by mass) | 1.56 | 0.66 | 0.4 | 1.82 | 0.13 | 0.40 | 0.00 |
| Specific surface area (m²/g) | 128 | 118 | 128 | 116 | 86 | 70 | 48 |
| Cycle length (hour) | 1995 | 2020 | 2116 | 1644 | 1535 | 1304 | 1001 |

The following can be seen from Table 1: in Examples 1-4, which contain nickel and zinc as well as a particular amount of a sulfur content except metal sulfide, where a proportion of the metal sulfide is within a particular range, a significantly high specific surface area and a sufficiently long cycle length may be obtained, as compared with Comparative Example 1, which has a small amount of sulfur contained in the desulfurizing agent, and Comparative Examples 2-3, which contain nickel sulfide and zinc sulfide as well as a higher proportion of metal sulfide.

## Claims

1. A desulfurizing agent for use in a desulfurizing process for removing sulfur components from hydrocarbon oil, the desulfurizing agent containing nickel, zinc and a sulfur component,
wherein a sulfur content except metal sulfide in the desulfurizing agent is 0.2% by mass or more in the total mass of the desulfurizing agent, and a proportion of the metal sulfide in the sulfur component contained in the desulfurizing agent is 25% or less.

2. The desulfurizing agent according to claim 1, wherein the desulfurizing agent contains nickel in an amount of 1-50% by mass and zinc in an amount of 20-80% by mass.

3. The desulfurizing agent according to claim 1 or 2, wherein the desulfurizing agent has a specific surface area of 100 m²/g or more.

4. A method for producing a desulfurizing agent according to any one of claims 1-3, the desulfurizing agent obtained by a coprecipitation method using an acid solution containing nickel and zinc and an alkaline solution containing an alkali metal,
wherein a ratio of an amount of alkali metals contained in the alkaline solution to a total amount of nickel and zinc contained in the acid solution is preferably 2.4 or less in molar ratio.
